# EUROPEAN PATENT APPLICATION

(11) **EP 1 935 234 A2**
(43) Date of publication of application: **25.06.2008**
(21) Application number: 07023971.0
(22) Date of filing: 11.12.2007
(51) Int. Cl.: A01G 9/10

(54) **Shape permanent growing medium and a process for the manufacture thereof**

(30) Priority: 19.12.2006 DK 200601665
(71) Applicant: Gartneriet Bladgroent ApS, 4600 Koege (DK)
(72) Inventor: Larsen, Gert, 4600 Køge (DK)
(74) Representative: Christensen, Bent

(57) **Abstract**

A shape permanent or deformation-resistant growing medium in the shape of a block, that may hold one or more plants, consists of an active or inactive growing medium and an adhesive or binder providing shape and strength, said adhesive or binder being gypsum (calcium sulphate, CaSO₄ · 2H₂O). By using gypsum as an adhesive or binder it is possible to make known growing media completely shape permanent or deformation-resistant in a quite simple way enabling plants to grow and thrive absolutely normally, while the growing medium keeps its original shape under practically any circumstances. When the medium is no longer of use, it may be discarded without any problem and without any costs of disposal.

## Description

### Technical Field

The present invention relates to a shape permanent growing medium for horticulture and a method for producing said growing medium.

The basis for the present invention is the fact that it surprisingly turned out that it is possible to make known growing media completely deformation-resistant or shape permanent in a simple way, hereby allowing plants to grow and thrive absolutely normally and at the same time allowing the growing medium to keep its original shape under almost any circumstances.

Among the most frequently used growing media are sphagnum and Grodan®/Cultilene®. Sphagnum remains to be the most frequently used growing medium in the field of horticulture. It is an organic active growing medium with a number of excellent features. Furthermore, it keeps on being the favourite growing medium for pot plants. Sphagnum does well in pots and provides plants with ideal conditions in terms of water, air and nutrition. As an organic active growing medium, sphagnum comprises organic material in a more or less decomposed state. This means that nutrients may be released and bound to the benefit of plants. Nutrients are released simultaneously with the decomposition of organic substances. Therefore, the structure is variable during the growing process and changes depending on the progression of the decomposition process. Hence, sphagnum has a tendency to collapse and change the air conditions during the progress of the growing process, which prevents the excellent growing features from being maintained during a longer period of time like for example several years.

Grodan®/Cultilene® is also a frequently used and suitable growing medium, especially when it comes to production of tomatoes and cucumbers. However, Grodan®/Cultilene® is an inactive growing medium, i.e. a medium that neither chemically binds nor releases nutrient ions. It is made out of volcanic material, which was originally used as isolation material (rock wool ["Rockwool®"] or glass wool/spun glass ["Isover", Saint Gobain], and/or similar trade marks and products), but later by accident appeared to be well-fitted as a growing medium.

Grodan®/Cultilene®, which has been on the market for almost 30 years, may be used alone (unmixed) as a shaped growing plate or in combination with sphagnum, for example when producing pot plants where a higher air content and more stability in the growing medium is required. Grodan®/Cultilene® has to some extent water absorbent features. However, its pH-stabilising ability is, like its conductance, rather poor. Hence, Grodan®/Cultilene® alone is unsuitable as a growing medium for pot plants. Furthermore, if Grodan®/Cultilene® is used when growing vegetables in glasshouses, water and fertiliser dosage should be handled with care by the horticultural farm.

In certain cases of pot plant production, porous clinkers or Leca^{®} ("light expanded clay aggregate") are mixed in sphagnum in order to create a higher air content in the growing medium. Plants in Leca^{®} alone (unmixed) are also used for example in connection with indoor planting in office environments.

Other known inactive growing media are for example Perlite and pumice, which in unmixed form to a small extent are used for the production of tomatoes and cucumbers. Furthermore, Perlite is to a large extent used as soil improver in active growing media since the structure of the media is hereby improved or maintained during a longer period of time.

The above disadvantages related to sphagnum and Grodan®/Cultilene® have - together with the fact that those media are predominant in the field of horticultural production - brought along the need for development of alternative growing media. As each of the known growing media separately is fitted only for the growing of specific plants or plant categories and growing systems, the uses of those growing media are limited from the outset. Therefore, an explicit requirement of a new growing medium has been that the medium should be able to be compounded ideally (so to speak "tailor-made") for a specific purpose, while taking into consideration the totally variable needs of every single plant and the technical devices of the individual horticultural farm.

One of the most recent growing media in the field of horticulture is GroWorld^{®}, which is an active inorganic growing medium in the form of a mixture of lava and clay products in the right proportions. The growing medium GroWorld^{®} is referred to in the applicant's European patent application no. 04724987.5 (published as EP 1 628 522 A1) and is distinguished by the fact that it is made of one or more ingredients chosen among the following: pumice, Perlite, clay minerals, porous clinkers and lava. Furthermore, it may comprise zeolites and/or vermiculite as well as other possible additives.

### Background

Although calcium sulphate, CaSO₄·2H₂0 (gypsum) is a well-known material with various uses, gypsum has not been used in connection with growing media for plants so far, at least not with the purpose of making the growing medium shape permanent or deformation-resistant, while maintaining all the features required for growing. A few growing media comprising gypsum are known; however, the objectives for the addition of gypsum in these media are quite different.

For example DE 198 22 621 A1 discloses a porous concrete-like granulate made of quartz sand, limestone, cement, aluminum powder and water as well as 1 - 10% natural gypsum. It is a loose granulate, which cannot be made form stable and which has to be held in a container, such as a box or pot.

DE 196 11 333 A1 describes a substrate for germination and growing of plants, It is made of a carrier in the form of two or more materials and a binder, which adheres to the carrier and hardens thereon. The binder may for example be gypsum. After adhesion, the substrate may have an essentially loose particle form and no form stability is thus aimed at.

Another example of the use of calcium sulphate (gypsum) in connection with growing media for plants is disclosed in DE 37 768 87 D describing a granular medium, which may be coated with sodium silicate including limestone or gypsum in order to obtain a slower passage of water or nutrients through the pores. In addition, the use of gypsum as an inert filler in polymer-based media for the growing of plants is disclosed in GB 1 376 091. However, in none of these references form stability is aimed at by using gypsum.

JP 2005-312352 A also discloses the use of gypsum in connection with growing substrates. The substrate described is a substrate for germination and growing of plants and trees on roofs, to said substrate i.a. is added gypsum, a neutral solidification material including iron ions and a supporting material that should prevent earth, sand and other ingredients of the substrate from being washed or blown away by giving the substrate a certain degree of structure. The supporting material may be for example Rockwool® or Cuitilene®.

NL 1028918 C discloses a transparent or partly translucent container filled with a hardening or setting mixture of a granular material and gypsum. The granular material includes sand. After adding water, the mixture gets the opportunity to harden or set, after which the product may be used as a flower pot for the growing of indoor plants. However, a growing medium should be added first.

### Disclosure of the Invention

All the known media have the following features in common: they have to be held in a container such as a pot, box, growing bag or the like in order to be able to be handled by and fit in the various growing and irrigation systems at horticultural farms. This requires that appropriate containers adapted to the actual needs are provided. This of course leads to additional routines and costs for the horticulturist. If the growing medium itself could be made shape permanent or deformation-resistant, thereby avoiding the use of an outer container, a simplification of the growing process would be achieved, since the number of routines would be reduced, particularly if the shape permanent or deformation-resistant medium could simply be discarded after use.

The demands on a shape permanent medium are that - apart from the fact that it has to be able to keep its shape under any temperature and humidity conditions - (1) plants must be able to grow unobstructedly and freely in the medium, (2) the medium has to be able to absorb and transport water and fertilisers, and (3) the materials used in the production process may not release any substances that may be harmful to plants or to the surrounding environment when discarding the growing medium after use.

Previously, attempts have been made to add various binders or adhesives to growing media in order to make them rigid and shape permanent. Latex, organic adhesives, water glass and other silicate compounds, maize starch and potato flour among others have been added without achieving any satisfactory results. It turned out that either the adhesives do not have any effect, the use of growing media is limited to specific, narrow boundaries as regards the size of the particles, or the various binders have turned out to be harmful to the growing media.

Surprisingly, it now appears that the use of gypsum (calcium sulphate, CaSO₄ · 2H₂0) as an adhesive or binder may result in growing media with unexpected excellent and advantageous features bringing along a number of uses and advantages which are described in detail below.

### Brief Description of the Drawings

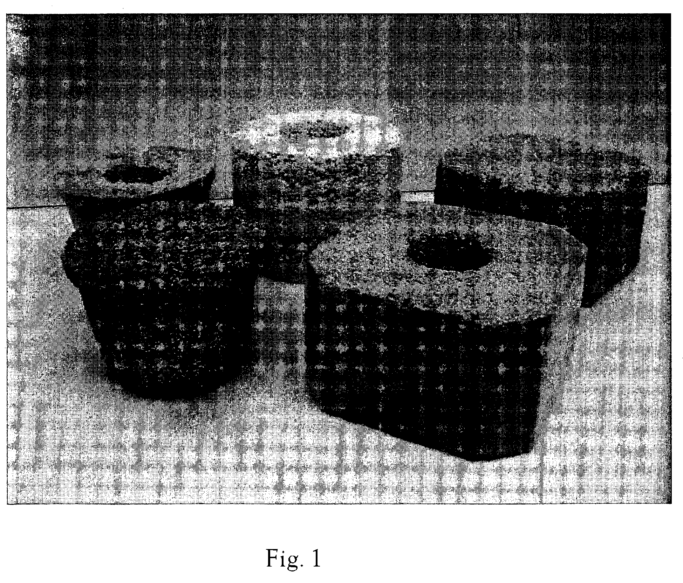

The invention is explained in detail below with reference to the drawings, in which
Fig. 1 shows a number of appropriate designs for the growing medium according to the invention, and

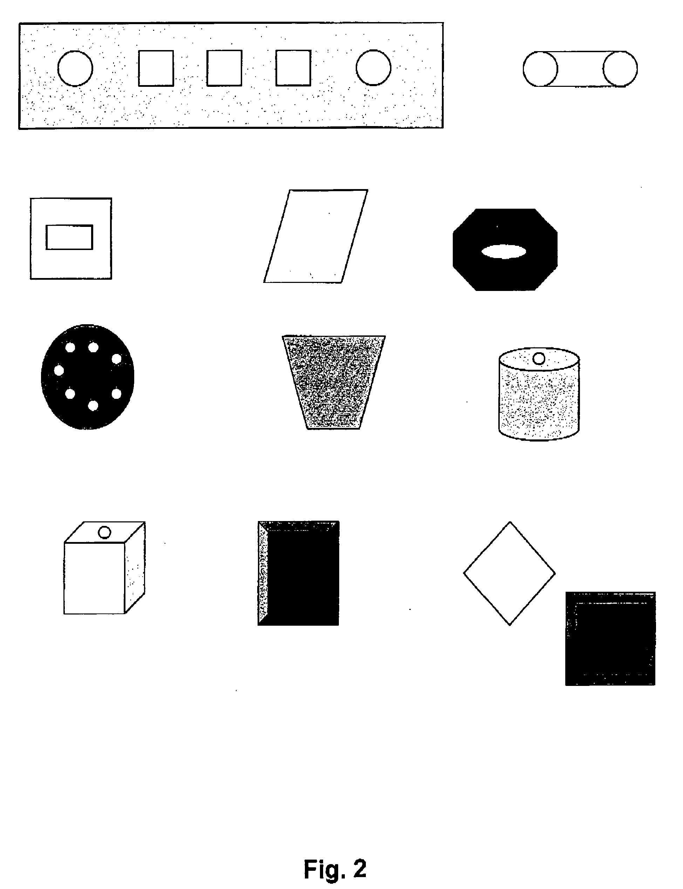

Fig. 2 gives a few examples of possible designs.

However, the invention is not limited to those designs in any way.

### Detailed description of the Invention

As mentioned above, it has surprisingly been found that the use of gypsum (calcium sulphate, CaSO₄ · 2H₂0) as an adhesive or binder may result in growing media with unexpected good and advantageous features. More specifically, with the present invention there is obtained a shape permanent growing medium with numerous uses within the field of horticulture. The invention also has obvious advantages for horticulturists in terms of efficient and simple routines as well as flexibility and financial and environmental issues.

It is possible to mix growing media and gypsum in practically any conditions, for example from 1:99 to 90:10, and obtain deformation-resistant growing media, which may be designed into any requested form - entirely in accordance with the requested purpose. The growing medium may thus be designed into small or large blocks, in which one or more plants may grow, or the growing medium may be designed into a usual flowerpot or even into any other form, which for example may be chosen in consideration of the existing irrigation system or possible devices and appliances to be used for handling and transporting plants. The medium may keep its advantageous and practical structure as regards the pore size and mobility for the roots of the plants, while the requested outer form is maintained.

The growing medium according to the invention is entirely shape permanent or deformation-resistant, enabling plants to grow and thrive absolutely normally, while the growing medium keeps its original shape under practically any circumstances.

In addition, the growing medium according to the invention has a particularly good water-absorbing ability, which makes it possible to water the plants both from above and from below. The efficient capillarity that provides the water-absorbing ability is so distinct that it is possible to place several units of the medium on top of each other and still make sure that a plant from the topmost unit is being watered from below.

As mentioned before, the growing medium according to the invention may be designed in any size and shape, and when the medium is no longer of use, it may be discarded without any problem and without any costs of disposal.

The growing medium itself may be any active or inactive growing medium, to which there is added gypsum according to the invention. A preferred growing medium is of the GroWorld® type with a composition corresponding to from 0 to 90%, preferably from 0 til 50% pumice; from 0 to 90%, preferably from 0 to 50% Perlite; from 0 to 90%, preferably from 0 to 50% porous clinkers porous clinkers, from 0 to 1% lava and from 0 to 10% clay and possibly from 1 to 10% zeolites and/or from 1 to 50% vermiculite and other additives, preferably in a total amount of up to 1%. The invention is however not limited to this specific type of growing medium.

The growing medium according to the invention is produced according to a method, which in itself is known. According to the method, the chosen active or inactive growing medium is mixed with gypsum in the selected blending proportion and as much water as needed is added for the mixture to become liquid, after which the mixture is shaped, for example by using a mould, and dried.

The blending proportions between the growing medium and gypsum depend on the intended use, but may be easily determined by testing.

When it comes to shaping technology, the shape permanent or deformation-resistant growing medium according to the invention presents unlimited possibilities, since both size and shape of the individual product may vary practically beyond any limit.

By changing the shape of the product, its fields of use are being changed. Furthermore, the features and characteristics of the material have an effect on the fact that the final product may be precision-moulded and/or diecast with or without any holes for germs or plants. This means for example that the final product may be used in combination with robotics for the management of planting processes. No other growing media make this function possible.

The invention is illustrated in more details by the following examples.

### Examples

As non-limiting examples of possible uses, the following may be mentioned:
a) Ordinary growing blocks, Groblok^{®}, standard size, for example square, with dimensions 10 x 10 x 6.5 cm (length, width, height) with one hole, or 15 x 10 x 6.5 cm with two holes, or any other size suitable for horticultural purposes.
b) Ordinary growing plates, Groslab^{®}, upon which Groblok^{®} is placed on top in various standard sizes, for example rectangular, with dimensions 10 x 20 x 50 cm, 15 x 15 x 60 cm or 20 x 20 x 25 cm. Besides, any other size suitable for horticultural purposes may be used, including pre-packed, purpose-oriented growing media like for example Bato buckets and/or other similar growing buckets irrespective of the brand.
c) Containers in the shape of for example flowerpots, jars, boxes, since the material from a shaping technology point of view may be designed into any known shape, such as square, rectangular, round and oval, but also in any other arbitrary new shape.

With regard to the production itself, the product may be manufactured and precision-moulded or designed into its shape out of the raw materials mentioned below. It is also possible to manufacture the product covered or coated with all kinds of surface materials, including any kind of paper or cardboard, silicates of any type as well as any kind of polymers with arbitrary compositions, especially biodegradable plastic types. Those surface materials may be dyed and/or have prints. Moreover, it is possible to manufacture the growing medium itself in all kinds of colours.

By using biodegradable plastics the product may be discarded when it is no longer of use, simply by placing it directly on earth upon which it will be reduced to vegetable mould. This is a Clear advantage. The degradation products brought about then become part of the further ecological chain.

Additionally, the shape permanent or deformation-resistant growing medium according to the invention may replace the traditional, known flowerpots made of stone, plastic or any other known product. In this case, the mixture of the growing medium and gypsum is shaped or moulded into a shape corresponding to the shape of a traditional flowerpot, after which the shaped growing medium may, if requested, be covered or coated with for example paper, cardboard or a biodegradable plastic material.

In theory, it is possible to produce any possible form, including combinations in which the outer side is solid and hard, while the inner side is softer, or vice versa.

The deformation-resistant growing medium according to the invention may consist of zeolites, vermiculite, Perlite, pumice, clay minerals, porous clinkers, volcanic slag and mixtures hereof. A preferred medium for the use according to the invention is the above-mentioned medium of the type GroWorld®, but any other active or inactive medium may be used as well. The medium can keep its advantageous and practical structure with appropriate pore size and excellent mobility for the roots of the plant, while the chosen outer form is maintained unaltered.

The plant may grow directly in the growing medium according to the invention or another growing medium may be inserted in the growing medium according to the invention. Otherwise, the medium may be placed directly on or in another medium or it may be used separately as it is.

## Claims

1. A shape permanent or deformation-resistant growing medium in the shape of a block, which can hold one or more plants and which consists of an active or inactive growing medium and an adhesive or binder providing shape and strength, **characterised in that** the adhesive is gypsum (calcium sulphate, CaSO₄ · 2H₂0).

2. The medium according to claim 1, **characterised in that** the growing medium is mixed with gypsum (calcium sulphate, CaSO₄ · 2H₂0) in a blending proportion from 1:99 to 90:10.

3. The medium according to claim 1 or claim 2, **characterised in that** the active or inactive growing medium is chosen from the group consisting of sphagnum, Grodan®/Cultilene®, porous clinkers, Perlite, leca^{®} and GroWorld^{®}.

4. A method for the production of a shape permanent or deformation-resistant growing medium according to any of claims 1-3, **characterised in that** the selected active or inactive growing medium is mixed with gypsum (calcium sulphate, CaSO₄ · 2H₂0) in the chosen blending proportion and as much water as needed is added for the mixture to become liquid, after which the mixture is shaped, for example by using a mould, and dried.

5. The method according to claim 4, **characterised in that** the growing medium is of the type GroWorld® with a composition corresponding to from 0 to 100% pumice; from 0 to 100% Perlite; from 0 to 100% porous clinkers; from 0 til 10% lava and from 0 to 10% clay, optionally from 0 to 10% zeolites and/or from 0 to 50% vermiculite and a minor amount of other additives, preferably in a total amount of up to 1%.

6. The method according to claim 5, **characterised in that** the growing medium is of the type GroWorld® with a composition corresponding to from 0 to 90%, preferably from 0 til 50% pumice; from 0 to 90%, preferably from 0 to 50% Perlite; from 0 to 90%, preferably from 0 til 50% porous clinkers; from 0 til 1% lava and from 0 to 10% clay, optionally from 1 to 10% zeolites and/or from 1 to 50% vermiculite and a minor amount of other additives, preferably in a total amount of up to 1%.

7. The use of gypsum (calcium sulphate, CaSO₄ · 2H₂0) as an adhesive for the production of a shape permanent or deformation-resistant growing medium in the shape of a block, that may hold one or more plants.
